# EUROPEAN PATENT APPLICATION

(11) **EP 4 530 902 A1**
(43) Date of publication of application: **02.04.2025**
(21) Application number: 24188810.6
(22) Date of filing: 16.07.2024
(51) Int. Cl.: G06F 21/60, G06F 21/62, H04L 9/40

(54) **TRANSLATION CIRCUITRY FOR ACCESS CONTROL IDENTIFIER MECHANISMS**

(30) Priority: 29.09.2023 US 202318478661
(71) Applicant: INTEL Corporation, Santa Clara, CA 95054 (US)
(72) Inventor: NEVE DE MEVERGNIES, Michael Carl, Guidel (FR); VENKITASUBRAMANI, Anand, Bangalore (IN)
(74) Representative: Viering, Jentschura & Partner mbB Patent- und Rechtsanwälte

(57) **Abstract**

Systems or methods of the present disclosure may provide a system that includes a secure processor subsystem that includes a processor and a first programmable lookup table. The first programmable lookup table is to receive global identifiers for initiators of operations using a resource and to translate the global identifiers to respective local identifiers for use in the secure processor subsystem. The initiators are external to the secure processor subsystem. The secure processor subsystem also includes a second programmable lookup table to translate the local identifiers to respective global identifiers for egresses from the secure processor subsystem.

## Description

### BACKGROUND

The present disclosure relates generally to interactions between initiator and target/resource devices (e.g., processors, memory, peripherals). More particularly, the present disclosure relates to interactions between devices with different access control mechanisms.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it may be understood that these statements are to be read in this light, and not as admissions of prior art.

Access control is an important aspect of security where access to sensitive resources is to be controlled/protected from multiple logical and physical initiators in complex systems (e.g., systems on a chip (SoC)). Initiators may be any device that starts/drives a particular action to be performed in at least one of the two or more connected devices. Different access control mechanisms exist in different processor system architectures, such as WorldGuard for Reduced Instruction Set Computer type 5 (RISC-V)-based processors, TrustZone and Realms from ARM-based processers, or other access control mechanisms with one or more worlds or tiers granted different levels of access.

Access control may be based on securely tagging or identifying each initiator with a "security world" or local identifier (LID) identifying an initiator within a locality/world. Access control management includes controlling access to resources based on a security access policy and the LID.

Some systems include multiple instances of different types of access control (e.g., WorldGuard)-based processors allow more than one processor to be a trusted agent/LID having the rights to set access control policy across the entire system. Since each instance of the processor may have the same set of LIDs, LIDs within each processor may be converted to a global security identifier (GID) to uniquely identify each processor at the system level.

The processors also may have a coherency port that enables external initiators to obtain a one-way (or IO-coherent) view of the processor through its cache subsystem. Since the processor may only understand LIDs even for the external initiators connected via the coherency-port, GIDs may be unable to be used by such processors. Thus, combining multiple processors with same or different LIDs at a system level where the processors themselves understand only LIDs may lead to potential access control management issues where the processor does not understand the GID used. Processors/other devices may be designed to function using GIDs internally. However, legacy subsystems may already be deployed with LID-based operations meaning that all such systems would need to have all such devices replaced, greatly increasing the cost to homogenize the access control mechanism identifier schemes.

### BRIEF DESCRIPTION OF THE DRAWINGS

Various aspects of this disclosure may be better understood upon reading the following detailed description and upon reference to the drawings in which:
FIG. 1 is a block diagram of a system used to program an integrated circuit device, the system including a host device and a field-programmable gate array (FPGA), in accordance with an embodiment of the present disclosure;
FIG. 2 is a block diagram of the integrated circuit device of FIG. 1, in accordance with an embodiment of the present disclosure;
FIG. 3 is a block diagram of programmable fabric of the integrated circuit device of FIG. 1, in accordance with an embodiment of the present disclosure;
FIG. 4 is a simplified block diagram of a system that includes a secure processor subsystem that manages access control for a resource using local identifiers received at the secure processor subsystem using global identifiers, in accordance with an embodiment of the present disclosure; and
FIG. 5 is a block diagram of a data processing system including the integrated circuit device of FIG. 1 and/or secure processor subsystem of FIG. 4, in accordance with an embodiment of the present disclosure.

### DETAILED DESCRIPTION OF SPECIFIC EMBODIMENTS

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time-consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

The present disclosure describes systems and techniques related to converting global identifiers (GIDs) of external initiators for a processor subsystem to local identifiers (LID) when accessing the processor subsystem. For instance, the conversion for ingress transactions from external initiators to the local processor subsystem may be performed using a GID-LID programmable secure lookup table (LUT), and conversions of LIDs to GID for egress transactions leaving the local processor subsystem may also be performed with another LUT or using the same LUT used for ingresses. These LUTs may only be accessible by a trusted agent\LID to ensure that trust is maintained. The resources within the processor subsystem check the initiators based on the LIDs.

As previously noted, some external initiators accessing a coherency-port input of the local processor subsystem may seek an IO-coherent view of a local resource within the local processor subsystem or a resource (such as DDR) which is outside the local processor subsystem. The combination and synchronization of two programmable LUTs at ingress and egress ensures that the external initiator is mapped to a LID for internal/local access and then is mapped to the original GID exiting the local processor subsystem (e.g., accessing the DDR).

Moreover, in some embodiments, only the trusted LID in the system may have the rights to configure the LUTs and set up an access policy for other resources in the system. The access policy of the resources internal to the processor (such as Tightly Coupled Memories (TCMs), LID markers, etc.) is set by the trusted LID that may be outside of the particular processor subsystem but connects via the coherency port. To this point, a particular LID may be denoted as the trusted LID, and it is ensured that no other world or tier in the local processor subsystem is allowed to take this privileged role that is controlled by the trusted LID.

Using the paired (or single) lookup table-based conversions enables a device to be securely designed/built in a simple yet scalable way potentially using multiple instances of different types of processor subsystems with or without coherency-port accesses. These subsystems may have heterogenous security/access control mechanisms such as RISC-V WorldGuard, ARM TrustZone, and/or other suitable access control mechanisms. Using these conversions enables customers to have a high degree of granularity of secure access control with multiple different secure worlds/localities in the system without compromising access control.

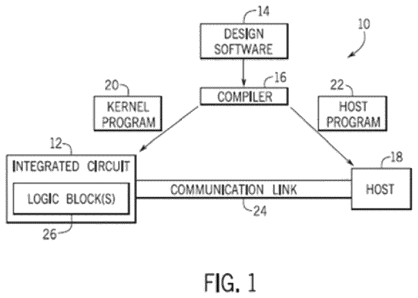

With the foregoing in mind, FIG. 1 illustrates a block diagram of a system 10 that may implement one or more functionalities. For example, a designer may desire to implement functionality, such as the operations of this disclosure, on an integrated circuit device 12 (e.g., a programmable logic device, such as a field programmable gate array (FPGA) or an application specific integrated circuit (ASIC)). In some cases, the designer may specify a high-level program to be implemented, such as an OpenCL^{®} program or SYCL^{®}, which may enable the designer to more efficiently and easily provide programming instructions to configure a set of programmable logic cells for the integrated circuit device 12 without specific knowledge of low-level hardware description languages (e.g., Verilog or VHDL). For example, since OpenCL^{®} is quite similar to other high-level programming languages, such as C++, designers of programmable logic familiar with such programming languages may have a reduced learning curve than designers that are required to learn unfamiliar low-level hardware description languages to implement new functionalities in the integrated circuit device 12.

The designer may implement high-level designs using design software 14, such as a version of INTEL^{®} QUARTUS^{®} by INTEL CORPORATION. The design software 14 may use a compiler 16 to convert the high-level program into a lower-level description. In some embodiments, the compiler 16 and the design software 14 may be packaged into a single software application. The compiler 16 may provide machine-readable instructions representative of the high-level program to a host 18 and the integrated circuit device 12. The host 18 may include a host processor, such as a central processing unit (CPU), a system on a chip (SoC), and/or any other processor types. The host 18 may receive a host program 22 which may be implemented by the kernel programs 20. To implement the host program 22, the host 18 may communicate instructions from the host program 22 to the integrated circuit device 12 via a communications link 24, which may be, for example, direct memory access (DMA) communications or peripheral component interconnect express (PCIe) communications. In some embodiments, the kernel programs 20 and the host 18 may enable configuration of a logic block 26 on the integrated circuit device 12. The logic block 26 may include circuitry and/or other logic elements and may be configured to implement arithmetic operations, such as addition and multiplication.

The designer may use the design software 14 to generate and/or to specify a low-level program, such as the low-level hardware description languages described above. For example, the design software 14 may be used to map a workload to one or more routing resources of the integrated circuit device 12 based on a timing, a wire usage, a logic utilization, and/or a routability. Additionally or alternatively, the design software 14 may be used to route first data to a portion of the integrated circuit device 12 and route second data, power, and clock signals to a second portion of the integrated circuit device 12. Further, in some embodiments, the system 10 may be implemented without a host program 22 and/or without a separate host program 22. Moreover, in some embodiments, the techniques described herein may be implemented in circuitry as a non-programmable circuit design. Thus, embodiments described herein are intended to be illustrative and not limiting.

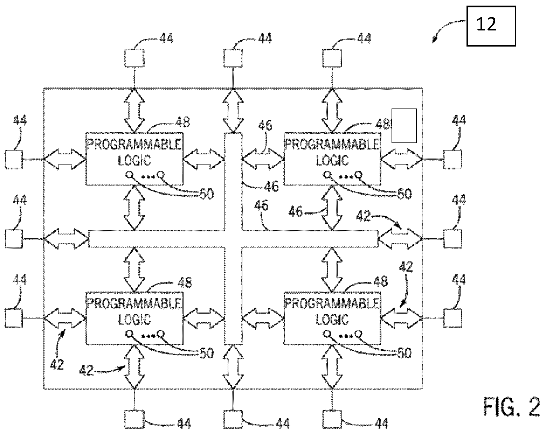

Turning now to a more detailed discussion of the integrated circuit device 12, FIG. 2 is a block diagram of an example of the integrated circuit device 12 as a programmable logic device, such as a field-programmable gate array (FPGA). Further, it should be understood that the integrated circuit device 12 may be any other suitable type of programmable logic device (e.g., a structured ASIC such as eASIC^{™} by Intel Corporation ASIC and/or application-specific standard product). The integrated circuit device 12 may have input/output circuitry 42 for driving signals off the device and for receiving signals from other devices via input/output pins 44. Interconnection resources 46, such as global and local vertical and horizontal conductive lines and buses, and/or configuration resources (e.g., hardwired couplings, logical couplings not implemented by designer logic), may be used to route signals on the integrated circuit device 12. Additionally, interconnection resources 46 may include fixed interconnects (conductive lines) and programmable interconnects (i.e., programmable connections between respective fixed interconnects). For example, the interconnection resources 46 may be used to route signals, such as clock or data signals, through the integrated circuit device 12. Additionally or alternatively, the interconnection resources 46 may be used to route power (e.g., voltage) through the integrated circuit device 12. Programmable logic 48 may include combinational and sequential logic circuitry. For example, programmable logic 48 may include look-up tables, registers, and multiplexers. In various embodiments, the programmable logic 48 may be configured to perform a custom logic function. The programmable interconnects associated with interconnection resources may be considered to be a part of programmable logic 48.

Programmable logic devices, such as the integrated circuit device 12, may include programmable elements 50 with the programmable logic 48. In some embodiments, at least some of the programmable elements 50 may be grouped into logic array blocks (LABs). As discussed above, a designer (e.g., a user, a customer) may (re)program (e.g., (re)configure) the programmable logic 48 to perform one or more desired functions. By way of example, some programmable logic devices may be programmed or reprogrammed by configuring programmable elements 50 using mask programming arrangements, which is performed during semiconductor manufacturing. Other programmable logic devices are configured after semiconductor fabrication operations have been completed, such as by using electrical programming or laser programming to program the programmable elements 50. In general, programmable elements 50 may be based on any suitable programmable technology, such as fuses, anti-fuses, electrically programmable read-only-memory technology, random-access memory cells, mask-programmed elements, and so forth.

Many programmable logic devices are electrically programmed. With electrical programming arrangements, the programmable elements 50 may be formed from one or more memory cells. For example, during programming, configuration data is loaded into the memory cells using input/output pins 44 and input/output circuitry 42. In one embodiment, the memory cells may be implemented as random-access-memory (RAM) cells. The use of memory cells based on RAM technology as described herein is intended to be only one example. Further, since these RAM cells are loaded with configuration data during programming, they are sometimes referred to as configuration RAM cells (CRAM). These memory cells may each provide a corresponding static control output signal that controls the state of an associated logic component in programmable logic 48. In some embodiments, the output signals may be applied to the gates of metal-oxide-semiconductor (MOS) transistors within the programmable logic 48.

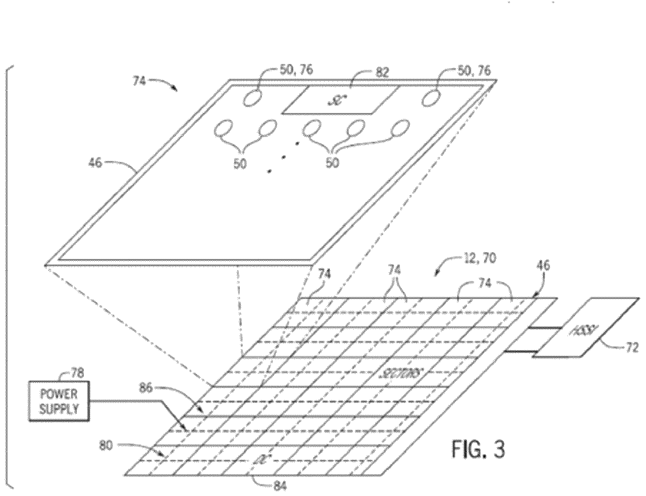

The integrated circuit device 12 may include any programmable logic device such as a field programmable gate array (FPGA) 70, as shown in FIG. 3. For the purposes of this example, the FPGA 70 is referred to as a FPGA, though it should be understood that the device may be any suitable type of programmable logic device (e.g., an application-specific integrated circuit and/or application-specific standard product). In one example, the FPGA 70 is a sectorized FPGA of the type described in U.S. Patent Publication No. 2016/0049941, "Programmable Circuit Having Multiple Sectors," which is incorporated by reference in its entirety for all purposes. The FPGA 70 may be formed on a single plane. Additionally or alternatively, the FPGA 70 may be a three-dimensional FPGA having a base die and a fabric die of the type described in U.S. Patent No. 10,833,679, "Multi-Purpose Interface for Configuration Data and Designer Fabric Data," which is incorporated by reference in its entirety for all purposes.

In the example of FIG. 3, the FPGA 70 may include transceiver 72 that may include and/or use input/output circuitry, such as input/output circuitry 42 in FIG. 2, for driving signals off the FPGA 70 and for receiving signals from other devices. Interconnection resources 46 may be used to route signals, such as clock or data signals, through the FPGA 70. The FPGA 70 is sectorized, meaning that programmable logic resources may be distributed through a number of discrete programmable logic sectors 74. Programmable logic sectors 74 may include a number of programmable elements 50 having operations defined by configuration memory 76 (e.g., CRAM). A power supply 78 may provide a source of voltage (e.g., supply voltage) and current to a power distribution network (PDN) 80 that distributes electrical power to the various components of the FPGA 70. Operating the circuitry of the FPGA 70 causes power to be drawn from the power distribution network 80.

There may be any suitable number of programmable logic sectors 74 on the FPGA 70. Indeed, while 29 programmable logic sectors 74 are shown here, it should be appreciated that more or fewer may appear in an actual implementation (e.g., in some cases, on the order of 50, 100, 500, 1000, 5000, 10,000, 50,000 or 100,000 sectors or more). Programmable logic sectors 74 may include a sector controller (SC) 82 that controls operation of the programmable logic sector 74. Sector controllers 82 may be in communication with a device controller (DC) 84.

Sector controllers 82 may accept commands and data from the device controller 84 and may read data from and write data into its configuration memory 76 based on control signals from the device controller 84. In addition to these operations, the sector controller 82 may be augmented with numerous additional capabilities. For example, such capabilities may include locally sequencing reads and writes to implement error detection and correction on the configuration memory 76 and sequencing test control signals to effect various test modes.

The sector controllers 82 and the device controller 84 may be implemented as state machines and/or processors. For example, operations of the sector controllers 82 or the device controller 84 may be implemented as a separate routine in a memory containing a control program. This control program memory may be fixed in a read-only memory (ROM) or stored in a writable memory, such as random-access memory (RAM). The ROM may have a size larger than would be used to store only one copy of each routine. This may allow routines to have multiple variants depending on "modes" the local controller may be placed into. When the control program memory is implemented as RAM, the RAM may be written with new routines to implement new operations and functionality into the programmable logic sectors 74. This may provide usable extensibility in an efficient and easily understood way. This may be useful because new commands could bring about large amounts of local activity within the sector at the expense of only a small amount of communication between the device controller 84 and the sector controllers 82.

Sector controllers 82 thus may communicate with the device controller 84, which may coordinate the operations of the sector controllers 82 and convey commands initiated from outside the FPGA 70. To support this communication, the interconnection resources 46 may act as a network between the device controller 84 and sector controllers 82. The interconnection resources 46 may support a wide variety of signals between the device controller 84 and sector controllers 82. In one example, these signals may be transmitted as communication packets.

The use of configuration memory 76 based on RAM technology as described herein is intended to be only one example. Moreover, configuration memory 76 may be distributed (e.g., as RAM cells) throughout the various programmable logic sectors 74 of the FPGA 70. The configuration memory 76 may provide a corresponding static control output signal that controls the state of an associated programmable element 50 or programmable component of the interconnection resources 46. The output signals of the configuration memory 76 may be applied to the gates of metal-oxide-semiconductor (MOS) transistors that control the states of the programmable elements 50 or programmable components of the interconnection resources 46.

The programmable elements 50 of the FPGA 40 may also include some signal metals (e.g., communication wires) to transfer a signal. In an embodiment, the programmable logic sectors 74 may be provided in the form of vertical routing channels (e.g., interconnects formed along a y-axis of the FPGA 70) and horizontal routing channels (e.g., interconnects formed along an x-axis of the FPGA 70), and each routing channel may include at least one track to route at least one communication wire. If desired, communication wires may be shorter than the entire length of the routing channel. That is, the communication wire may be shorter than the first die area or the second die area. A length L wire may span L routing channels. As such, a length of four wires in a horizontal routing channel may be referred to as "H4" wires, whereas a length of four wires in a vertical routing channel may be referred to as "V4" wires.

As discussed above, some embodiments of the programmable logic fabric may be configured using indirect configuration techniques. For example, an external host device may communicate configuration data packets to configuration management hardware of the FPGA 70. The data packets may be communicated internally using data paths and specific firmware, which are generally customized for communicating the configuration data packets and may be based on particular host device drivers (e.g., for compatibility). Customization may further be associated with specific device tape outs, often resulting in high costs for the specific tape outs and/or reduced scalability of the FPGA 70.

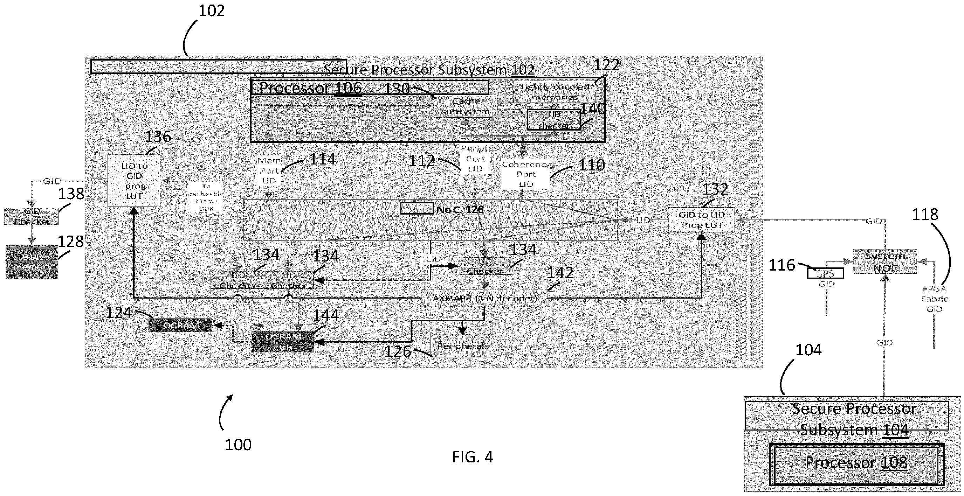

FIG. 4 is a block diagram of a system 100 that includes secure processor subsystems (SPSs) 102 and 104. For instance, the SPSs 102 and 104 may be any suitable processor subsystem, such as a RISC-V-based SPS. As illustrated, the SPSs 102 and 104 may each respectively include a processor 106 and 108. Both of the processors 106 and 108 may include a number (e.g., 32) of secure worlds. The illustrated processor 106 includes a coherency port 110, a peripheral port 112, and a memory port 114. The processor 108 and other processors of other subsystems (e.g., SPS 116) may be similarly configured/designed. The SPS 104, the SPS 116, and/or implemented logic in a device, such an FPGA fabric 118 of the FPGA 70, a programmable logic device, an SoC, memory, memory controller, or other device that may initiate operations in the SPS 102. As previously noted, various devices, such as the processors 106 and 108, may use LIDs internally as illustrated by the coherency port 110, the periphery port 112, and the memory port 114. Furthermore, the processors 106 and 108 may tag their internal firmware as separate LIDs (or World IDs) and propagate the LID on its bus interface to outside of a core and to a network on chip (NoC) 120 to its resources that may be internal to the SPS 102 and may convert the LID to a GID external to the SPS 102. For instance, the resources may include tightly coupled memory (TCM) 122, on-chip random access memory (OCRAM) 124, peripherals 126, DDR memory 128, and/or any other resources.

The coherency port 110 enables external initiators (e.g., the SPS 104, the SPS 116, and/or implemented logic in an FPGA fabric of the FPGA 70) tagged with the corresponding GIDs, outside of the SPS 102 to obtain a one-way coherent view via the processor 106 to internal or external resources via its cache subsystem 130. Each external initiator's GID has an equivalent LID, and hence GID is converted to LID via a programmable LUT 132. The converted-to LID can be propagated via the coherency port 110 or directly to the internal resources. LID checkers 134 may be used to protect the SPS 102 resources. For instance, the LID checkers 134 may be implemented in hardware and/or software and may store an allowed LID list and/or a blocked LID list to control whether or not certain LIDs are granted or rejected access to certain resources. If an external initiator needs a coherent view to a cached external resource (such as the DDR memory 128), the SPS 102 may map the LID back to its original GID via the programmable LID-GID LUT 136 at the egress to the external resource. In some embodiments, the LUTs 132 and 136 may be implemented in the same table or may be implemented in different tables. The system 100 may use GID checkers 138 to determine whether the GID is to be permitted access to the external resource.

The LUTs 132 and 136 are secure resources that can only be programmed by a trusted LID. In the illustrated embodiment, the trusted LID may be the SPS 104 that is outside of the SPS 102. The LID used in the trusted LID is converted to a GID at its egress from the SPS 104 and is converted back to LID at ingress into the SPS 102. The LID of the trusted LID may be the only LID that is allowed to set up access policy within the SPS 102.

The internal secure resources (e.g., TCM 122, etc.) are protected with LID-based access-checkers (LID checkers) 140 within the processor 106 in the SPS 102. The access to these internal resources may also be controlled by the policy that is set by the trusted LID (e.g., SPS 104) via the coherency port 110 of the SPS 102. In some embodiments, the trusted LID in the SPS 102 is the one that has a specific LID called Trusted LID (TLID) that may be used to change/modify the LUTs 132 and 136. In this illustration, the trusted LID is a particular LID in the SPS 104 that has the sole privilege to set access policy for all resources, LUTs 132 and 136, and in the system 100. This LID is mapped to a particular GID called a trusted GID (TGID) when it exits SPS 104 and gets converted to a specific Trusted LID (TLID) when it enters SPS 102. Furthermore, the LID-checkers in the SPS 102 may be programmable only by TLID including the internal LID checkers 140. Some of the peripherals 126 may use specific formats (e.g., APB) that may not have their own access controls. Additionally or alternatively to peripheral-controlled access control, the SPS 102 may use a decoder 142 to provide access control in addition to timers, routing, and/or other features that may be added using the decoder 142. Additionally or alternatively, controllers (e.g., OCRAM controller 144) may be used to provide access control and/or other controls for certain devices.

Any of the foregoing or following illustrated structures may be implemented in hardware, software, firmware, or a combination of both.

**Table 1. Example LUT 132**

| **GID** | **LID** |
|---|---|
| 200 : 222 | 8:30 |
| 223 (TGID) | 31 (TLID) |
| All other (0:199, 224:255) | Reject |

**Table 2. Example LUT 136**

| **LID** | **GID** |
|---|---|
| 0:7 (Originating internally at the SPS 102) | 32:39 |
| 8:30 | 200:222 |
| 31 (TLID) | 223 (TGID) if this SPS is the trusted agent or Reject if this SPS is not the trusted agent |

Tables 1 and 2 show an example of LUTs 132 and 136 where SPS 102 has 32 LIDs including eight internal LIDs (0-7) generated by the processor 106 and 24 LIDs (8-31) that are received at the coherency port 110. These twenty-four LIDs have GIDs in the range of 200-223. Further, ten external initiators with GIDs of 200-209 are allowed to access resources within the SPS 102 and fourteen with GIDs of 210-222 are allowed to access external resources in an I/O-coherent manner. The SPS 102 internal LIDs 0-7 are also allowed to access external resources and internal resources.

The LUT 132 is programmed to convert GID with 200-223 to a respective LID of 8-31 and to reject remaining GIDs, which are not allowed to access resources of the SPS 102. In other words, the LUT 132 may be used to deny access to any resource of the SPS 102 while the LID checkers 134 and/or 140 protect specific resources from LIDs that are not authorized to access specific resources even if given access to the SPS 102 for other resources. The LUT 136 is programmed to convert a LID with 0-7 to a respective GID 32-39; and a LID with 8-31 to a respective GID of 200-223. Due to the coherent and symmetric programming of the LUTs 132 and 136, LIDs are translated back to their original GIDs upon egress from the SPS 102.

The GID 223 is the trusted GID (TGID) in the overall system 100 and gets mapped to 31 (the TLID) in the SPS 102 and that can set up access policy for the LID checkers 134 and 140 in the SPS 102. The TGID may not need to exit the SPS 102 in an I/O-coherent manner as it is a configuration access and not a data access. However, the SPS 102 may co-own the trusted-agent role and may convert the TLID to the TGID via the LUT 136.

The above example is applicable for a processor with 32 security worlds, such as RISC-V based processor, but such techniques may be equally applicable to ARM-Trustzone-based processor or any other processors with two (or more) worlds of any appropriate access control mechanism. Furthermore, although the foregoing discusses such lookup tables in RISC or ARM-based processors, similar techniques may be applied to any processors, such as those implemented using FPGAs and/or ASICs. For instance, if the processor is implemented in the FPGA 70, different roles (e.g., admin v. user), clients in a multi-client environment, code type (e.g., manufacturer v. user code), and the like may be given different LIDs with the foregoing applied in such scenarios. Furthermore, in such embodiments, the programmable nature of the LUTs 132 and/or 136 may be implemented in the FPGA fabric of the FPGA 70.

In the LUTs 132 and/or 136, multiple GIDs may map to the same LID if these GIDs will terminate their transactions in the SPS 102 rather than outside resources (e.g., double data rate (DDR) memory 128). This mapping scheme allows multiple external initiators with different identifiers to have the same access control privileges within the local SPS 102. If they need to go out via IO-coherent port to the local SPS egress, such mapping may be forbidden since such mapping is not reversible as they will alias to same LID and cannot be given back their original GID.

To maintain trust originating from a single point in the entire device/system, all SPS other than the trusted SPS may be prevented from assuming/obtaining the trusted LID role. This scheme ensures that the trusted agent is limited to a single initiator in the whole system and a TLID in a local SPS cannot inappropriately control the access policy setting within the respective local SPS and/or outside of it.

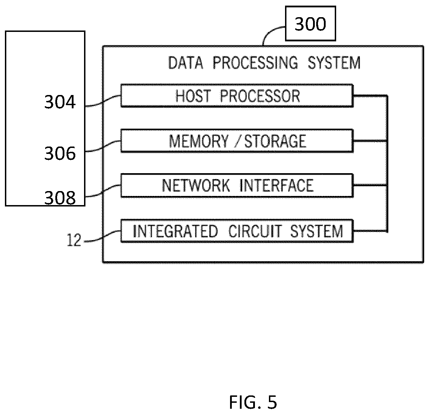

Bearing the foregoing in mind, the integrated circuit device 12 may be a component included in a data processing system, such as a data processing system 300, shown in FIG. 5. The data processing system 300 may include the integrated circuit device 12 (e.g., a programmable logic device), a host processor 304 (e.g., host 18), memory and/or storage circuitry 306, and a network interface 308. The data processing system 300 may include more or fewer components (e.g., electronic display, designer interface structures, ASICs). Moreover, any of the circuit components depicted in FIG. 5 may include integrated circuits (e.g., integrated circuit device 12). The host processor 304 may include any of the foregoing processors that may manage a data processing request for the data processing system 300 (e.g., to perform encryption, decryption, machine learning, video processing, voice recognition, image recognition, data compression, database search ranking, bioinformatics, network security pattern identification, spatial navigation, cryptocurrency operations, or the like). The memory and/or storage circuitry 306 may include random access memory (RAM), read-only memory (ROM), one or more hard drives, flash memory, or the like. The memory and/or storage circuitry 306 may hold data to be processed by the data processing system 300. In certain embodiments, the memory and/or storage circuitry 306 may store instructions, that when executed by the host processor 304, causes the host processor 304 (e.g., host 18) to perform any of the operations discussed herein. In some cases, the memory and/or storage circuitry 306 may also store configuration programs (bit streams) for programming the integrated circuit device 12. The network interface 308 may allow the data processing system 300 to communicate with other electronic devices. The data processing system 300 may include several different packages or may be contained within a single package on a single package substrate. For example, components of the data processing system 300 may be located on several different packages at one location (e.g., a data center) or multiple locations. For instance, components of the data processing system 300 may be located in separate geographic locations or areas, such as cities, states, or countries.

The above discussion has been provided by way of example. Indeed, the embodiments of this disclosure may be susceptible to a variety of modifications and alternative forms. While the embodiments set forth in the present disclosure may be susceptible to various modifications and alternative forms, specific embodiments have been shown by way of example in the drawings and have been described in detail herein. However, it should be understood that the disclosure is not intended to be limited to the particular forms disclosed. The disclosure is to cover all modifications, equivalents, and alternatives falling within the spirit and scope of the disclosure as defined by the following appended claims.

The techniques presented and claimed herein are referenced and applied to material objects and concrete examples of a practical nature that demonstrably improve the present technical field and, as such, are not abstract, intangible, or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

### EXAMPLE EMBODIMENTS

EXAMPLE EMBODIMENT 1. A system, comprising:
a secure processor subsystem, comprising:
a processor;
a first programmable lookup table to receive a plurality of global identifiers for initiators of operations using a resource and to translate the plurality of global identifiers to respective local identifiers for use in the secure processor subsystem, wherein the initiators are external to the secure processor subsystem; and
a second programmable lookup table to translate the local identifiers to respective global identifiers of the plurality of global identifiers for egresses from the secure processor subsystem; and
the resource.

EXAMPLE EMBODIMENT 2. The system of example embodiment 1, wherein the processor comprises a central processing unit.

EXAMPLE EMBODIMENT 3. The system of example embodiment 1, wherein the processor is implemented using a programmable logic device.

EXAMPLE EMBODIMENT 4. The system of example embodiment 1, wherein the secure processor subsystem comprises a network on chip used to propagate the local identifiers within the secure processor subsystem.

EXAMPLE EMBODIMENT 5. The system of example embodiment 1, wherein the initiators comprise an external secure processor subsystem external to the secure processor subsystem.

EXAMPLE EMBODIMENT 6. The system of example embodiment 1, wherein the initiators comprise a programmable logic device external to the secure processor subsystem.

EXAMPLE EMBODIMENT 7. The system of example embodiment 1, wherein the secure processor subsystem comprises a local identifier checker to control access to the resource based on the local identifiers.

EXAMPLE EMBODIMENT 8. The system of example embodiment 1, wherein the resource is external to the secure processor subsystem.

EXAMPLE EMBODIMENT 9. The system of example embodiment 8, wherein a first initiator of the initiators requests access to the resource, the first programmable lookup table translates a first global identifier of the plurality of global identifiers to a first local identifier of the local identifiers, the second programmable lookup table translates the first local identifier back to the first global identifier, and the first initiator obtains access to the resource using the retranslation back to the first global identifier.

EXAMPLE EMBODIMENT 10. The system of example embodiment 8, wherein the resource comprises dual-data rate memory external to the secure processor subsystem.

EXAMPLE EMBODIMENT 11. The system of example embodiment 1, wherein the initiators comprise a trusted local identifier that is external to the secure processor subsystem, a respective local identifier corresponding to the trusted local identifier comprises a trusted local identifier that grants the trusted local identifier the ability to program the first programmable lookup table and the second programmable lookup table.

EXAMPLE EMBODIMENT 12. The system of example embodiment 1, wherein the initiators obtain a coherent view to the resource via a coherency port and a cache of the processor.

EXAMPLE EMBODIMENT 13. A method, comprising:
receiving, at a secure processor subsystem, a request to access a resource using a global identifier used to identify a requesting device external to the secure processor subsystem;
using a programmable lookup table to translate the global identifier to a local identifier within the secure processor subsystem; and
granting access to the resource to perform an operation.

EXAMPLE EMBODIMENT 14. The method of example embodiment 13, comprising:
receiving a second request from a second initiator to access a second resource using an additional global identifier;
determining that the additional global identifier is not specified in the programmable lookup table as granted access to the secure processor subsystem; and
rejecting access to the secure processor subsystem by the second initiator.

EXAMPLE EMBODIMENT 15. The method of example embodiment 13, wherein granting access comprises using an additional lookup table to translate the local identifier back into the global identifier and granting a requesting device access to the resource, wherein the resource is outside of the secure processor subsystem.

EXAMPLE EMBODIMENT 16. The method of example embodiment 13,wherein the resource is internal to the secure processor subsystem and comprises tightly coupled memory of a processor of the secure processor subsystem.

EXAMPLE EMBODIMENT 17. The method of example embodiment 13, comprising:
checking at the resource whether the local identifier has access to the resource; and
granting or denying access to the resource based at least in part on the check.

EXAMPLE EMBODIMENT 18. A system, comprising:
an initiator requesting access to a resource;
a secure processor subsystem that is to perform access management control for the resource, wherein the secure processor subsystem comprises:
   a processor;
   a first programmable lookup table to receive a global identifier for the initiator and to translate the global identifier to a local identifier for use in the secure processor subsystem, wherein the initiator is external to the secure processor subsystem; and
   a second programmable lookup table to translate the local identifier to the global identifier for egress from the secure processor subsystem.

EXAMPLE EMBODIMENT 19. The system of example embodiment 18, wherein the secure processor subsystem comprises a local identifier checker that selectively grants access to the resource based at least in part on the local identifier.

EXAMPLE EMBODIMENT 20. The system of example embodiment 19, wherein the first programmable lookup table is configured to deny access to devices with global identifiers that are not mapped to a local identifier for the secure processor subsystem.

## Claims

1. A system, comprising:
a secure processor subsystem, comprising:
a processor;
a first programmable lookup table to receive a plurality of global identifiers for initiators of operations using a resource and to translate the plurality of global identifiers to respective local identifiers for use in the secure processor subsystem, wherein the initiators are external to the secure processor subsystem; and
a second programmable lookup table to translate the local identifiers to respective global identifiers of the plurality of global identifiers for egress transactions from the secure processor subsystem; and
the resource.

2. The system of claim 1, wherein the processor comprises a central processing unit.

3. The system of any of the preceding claims, wherein the processor is implemented using a programmable logic device.

4. The system of any of the preceding claims, wherein the secure processor subsystem comprises a network on chip used to propagate the local identifiers within the secure processor subsystem.

5. The system of any of the preceding claims, wherein the initiators comprise an external secure processor subsystem external to the secure processor subsystem.

6. The system of any of the preceding claims, wherein the initiators comprise a programmable logic device external to the secure processor subsystem.

7. The system of any of the preceding claims, wherein the secure processor subsystem comprises a local identifier checker to control access to the resource based on the local identifiers.

8. The system of any of the preceding claims, wherein the resource is external to the secure processor subsystem.

9. The system of claim 8, wherein a first initiator of the initiators requests access to the resource, the first programmable lookup table translates a first global identifier of the plurality of global identifiers to a first local identifier of the local identifiers, the second programmable lookup table translates the first local identifier back to the first global identifier, and the first initiator obtains access to the resource using the retranslation back to the first global identifier.

10. The system of claim 8 or 9, wherein the resource comprises dual-data rate memory external to the secure processor subsystem.

11. The system of any of the preceding claims, wherein the initiators comprise a trusted local identifier that is external to the secure processor subsystem, a respective local identifier corresponding to the trusted local identifier comprises a trusted local identifier that grants the trusted local identifier the ability to program the first programmable lookup table and the second programmable lookup table.

12. The system of any of the preceding claims, wherein the initiators obtain a coherent view to the resource via a coherency port and a cache of the processor.

13. A method, comprising:
receiving, at a secure processor subsystem, a request to access a resource using a global identifier used to identify a requesting device external to the secure processor subsystem;
using a programmable lookup table to translate the global identifier to a local identifier within the secure processor subsystem; and
granting access to the resource to perform an operation.

14. The method of claim 13, comprising:
receiving a second request from a second initiator to access a second resource using an additional global identifier;
determining that the additional global identifier is not specified in the programmable lookup table as granted access to the secure processor subsystem; and
rejecting access to the secure processor subsystem by the second initiator.

15. The method of claim 13 or 14, wherein granting access comprises using an additional lookup table to translate the local identifier back into the global identifier and granting a requesting device access to the resource, wherein the resource is outside of the secure processor subsystem.
